# EUROPEAN PATENT SPECIFICATION

(11) **EP 4 434 337 B1**
(45) Date of publication and mention of the grant of the patent: **12.08.2026**
(21) Application number: 24152075.8
(22) Date of filing: 16.01.2024
(51) Int. Cl.: A01K 89/01

(54) **FISHING SPINNING REEL**
ANGELWINDE
MOULINET DE PÊCHE

(30) Priority: 23.03.2023 JP 2023046667
(43) Date of publication of application: 25.09.2024
(73) Proprietor: Globeride, Inc., Higashikurume-shi, Tokyo 203-8511 (JP)
(72) Inventor: TSUTSUMI, Wataru, Higashikurume-shi, 203-8511 (JP); UENO, Hayato, Higashikurume-shi, 203-8511 (JP)
(74) Representative: Boult Wade Tennant LLP

(56) References cited:
- EP-A2- 0 681 784
- JP-A- H0 866 139
- JP-A- H11 313 582

## Description

### BACKGROUND OF THE INVENTION

### 1. TECHNICAL FIELD

The present invention relates to a fishing spinning reel.

### 2. DESCRIPTION OF THE RELATED ART

In a fishing spinning reel, a structure in which a bail is supported by a bail support member has been generally known. The bail support member is supported by a support arm provided on a rotor, and is provided to be rotatable between a fishing line winding position and a fishing line release position with respect to the support arm. When a tackle is casted, the operation of flipping the bail support member to the fishing line release position and swinging down a fishing rod to release a fishing line is performed.

Then, after the casting, the operation of returning the bail to the fishing line winding position and rotating a handle to wind the fishing line around a spool is performed. The return of the bail can also be performed by a rotational operation of the handle; however, when the return of the bail is performed by a rotational operation of the handle, for example, a phenomenon where the slackened fishing line winds around the bail support member may occur. As described above, when a phenomenon where the fishing line winds around the bail support member occurs, it may not be possible to make a smooth transition to a winding operation of the fishing line.

In a fishing spinning reel that prevents such winding of a fishing line, a technique in which the attachment structure of a bail to a line slider is devised has been known (for example, refer to JP 2000-270727 A). In a fishing spinning reel of JP 2000-270727 A, the occurrence of line entanglement, line damage, or the like can be prevented by smoothly guiding a fishing line.

### RELEVANT REFERENCES

### LIST OF RELEVANT PATENT LITERATURE

Patent Literature 1: Japanese Application Publication No. 2000-270727

EP 0 681 784 A2, JP H08 66139 A and JP H11 313582 A disclose each a fishing spinning reel according to the preamble of claim 1.

### SUMMARY OF THE INVENTION

However, in the fishing spinning reel of JP 2000-270727 A, the structure of a bail becomes complicated, so that the assembly becomes complicated and the cost becomes high, which is a problem. For this reason, the development of a technique capable of improving line entanglement regardless of the structure of the bail has been desired.

The present invention has been made to solve such problems, and an object of the present invention is to provide a fishing spinning reel capable of suitably improving line entanglement with a bail support member by imparting a characteristic to the shape of the bail support member.

In order to solve the above-described problems, a fishing spinning reel according to the present invention defined in claim 1 comprises a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller. An external inclined surface is formed in a region where the line roller is projected on an outer surface of the bail support member opposite to a side to which the line roller is attached. When a vertical plane including a central axis of the rotor is a first reference plane and a plane including a central axis of the line roller is a second reference plane, the external inclined surface is inclined from a proximal end side of the bail support member toward a distal end side of the bail support member to approach an inner surface side of the bail support member when viewed in a direction orthogonal to the second reference plane in a state where the bail support member is disposed such that the first reference plane and the second reference plane are in a parallel positional relationship.

In the fishing spinning reel, even when line entanglement such as the fishing line winding around the bail support member occurs, the fishing line can be guided from the proximal end side of the bail support member toward the distal end side and toward the inner surface side of the bail support member by the external inclined surface. Accordingly, the entangled fishing line is easily removed from the distal end side of the bail support member, so that the line entanglement is suitably eliminated. Therefore, fishing operability is improved. In addition, for example, when the bail is returned by a rotational operation of the handle, if the slackened fishing line becomes entangled with the bail support member, by applying tension to the entangled fishing line through a rotational operation of the handle, the fishing line is moved on the external inclined surface in a direction in which the fishing line is removed from the bail support member, so that the line entanglement is suitably eliminated.

In addition, in order to solve the above-described problems, the fishing spinning reel according to an example comprises a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller. A side inclined surface is formed in a region where the line roller is projected on a side surface of the bail support member on a side away from the spool when the bail support member is viewed in a central axis direction of the line slider. The side inclined surface is inclined from a proximal end side of the bail support member toward a distal end side of the bail support member to approach a spool side.

In the fishing spinning reel, even when line entanglement such as the fishing line becoming entangled with the bail support member occurs, the fishing line is guided from the proximal end side of the bail support member toward the distal end side and toward the spool side by the side inclined surface. Accordingly, the entangled fishing line is easily removed from the distal end side of the bail support member, so that the line entanglement is suitably eliminated. Therefore, fishing operability is improved. In addition, when the bail is returned by a rotational operation of the handle, if the slackened fishing line becomes entangled with the bail support member, by applying tension to the entangled fishing line through a rotational operation of the handle, the fishing line is moved on the side inclined surface in a direction in which the fishing line is removed from the bail support member, so that the line entanglement is suitably eliminated.

In addition, in order to solve the above-described problems, the fishing spinning reel according to an example comprises a rotor rotated by a winding operation of a handle; a bail support member attached to a support arm of the rotor, and supporting a bail; a line roller supported by the bail support member, and guiding a fishing line to a spool around which the fishing line is wound and held; and a line slider supporting one end of the bail, and guiding the fishing line picked up by the bail to the line roller. An external inclined surface is formed in a region where the line roller is projected on an outer surface of the bail support member opposite to a side to which the line roller is attached. In addition, a side inclined surface is formed in a region where the line roller is projected on a side surface of the bail support member on a side away from the spool when the bail support member is viewed in a central axis direction of the line slider. When a vertical plane including a central axis of the rotor is a first reference plane and a plane including a central axis of the line roller is a second reference plane, the external inclined surface is inclined from a proximal end side of the bail support member toward a distal end side of the bail support member to approach an inner surface side of the bail support member when viewed in a direction orthogonal to the second reference plane in a state where the bail support member is disposed such that the first reference plane and the second reference plane are in a parallel positional relationship. Furthermore, the side inclined surface is inclined to approach a spool side as the side inclined surface extends from the proximal end side of the bail support member toward the distal end side of the bail support member.

In the fishing spinning reel, even when line entanglement such as the fishing line becoming entangled with the bail support member occurs, due to a synergistic effect of the external inclined surface and the side inclined surface, the fishing line is three-dimensionally guided from the proximal end side of the bail support member toward the distal end side and toward the inner surface side of the bail support member and the spool side. Accordingly, the entangled fishing line is easily removed from the distal end side of the bail support member, so that the line entanglement is suitably eliminated. Therefore, fishing operability is improved. In addition, when the bail is returned by a rotational operation of the handle, if the slackened fishing line becomes entangled with the bail support member, by applying tension to the entangled fishing line through a rotational operation of the handle, the fishing line is moved on the external inclined surface and the side inclined surface in a direction in which the fishing line is removed from the bail support member. Accordingly, the line entanglement is suitably eliminated.

According to the invention, when a first reference line parallel to a central axis of the line slider and passing through a joint point between the line slider and the bail when viewed in the direction orthogonal to the second reference plane is drawn, the external inclined surface extends toward the distal end side of the bail support member with an intersection point between the first reference line and the outer surface of the bail support member as a starting point.

In this configuration, since the external inclined surface is formed in a region on the outer surface closer to the distal end side of the bail support member than the joint point between the line slider and the bail, the entangled fishing line can be effectively guided in the direction in which the entangled fishing line is removed from the bail support member. Accordingly, the line entanglement is suitably eliminated. In addition, since the weight of the distal end side of the bail support member can be reduced due to the external inclined surface, the inertial force of the rotor can be reduced, and the light rotation performance of the rotor can be realized. Accordingly, fishing operability is improved.

In addition, it is preferable that when a second reference line passing through a joint point between the line slider and the bail and extending outward from the spool in a radial direction when viewed in the central axis direction of the line slider is drawn, the side inclined surface extends toward the distal end side of the bail support member with an intersection point between the second reference line and the side surface of the bail support member as a starting point.

In this configuration, since the side inclined surface is formed in a region on the side surface closer to the distal end side of the bail support member than the joint point between the line slider and the bail, the entangled fishing line can be effectively guided in the direction in which the entangled fishing line is removed from the bail support member. Accordingly, the line entanglement is suitably eliminated.

In addition, it is preferable that the bail support member comprises a bail leg portion rotatably attached to the support arm, and a support portion provided to be continuous with the bail leg portion and supporting the line roller. It is preferable that an inner portion having a curved recess shape is formed in the bail leg portion on a side facing the spool in a bottom view in a direction orthogonal to a rotation axis of the bail support member and the support arm. It is preferable that a radius of curvature of the inner portion is 10 to 20 mm.

In this configuration, since the inner portion of the bail leg portion on the side facing the spool has a gentle curved shape without constriction, the entangled fishing line is smoothly guided from the proximal end side of the bail support member toward the distal end side compared to a case where the inner portion has a large radius of curvature. Accordingly, line entanglement is suitably eliminated in conjunction with actions and effects by the external inclined surface or the side inclined surface.

In addition, it is preferable that a hood portion partially covering the line roller is integrally formed on the bail support member, and that the hood portion extends from a bail support member side toward the line slider.

In this configuration, the fishing line removed from a distal end of the bail support member can be guided to a line slider side through the hood portion. Accordingly, the fishing line removed from the distal end of the bail support member can be prevented from being caught on the line roller.

In addition, it is preferable that an engagement portion with which an extension end of the hood portion engages is formed on the line slider, and that the extension end of the hood portion protrudes somewhat outward from an outer peripheral surface of the line slider in a radial direction in a state where the extension end is engaged with the engagement portion.

In this configuration, since the fishing line guided to the line slider side through the hood portion moves to the outer peripheral surface of the line slider located inside the extension end of the hood portion in the radial direction via the extension end protruding somewhat outward in the radial direction, the fishing line removed from the distal end of the bail support member can be prevented from being caught on the engagement portion.

According to the fishing spinning reel of the present invention, line entanglement with the bail support member can be suitably improved.

### BRIEF DESCRIPTION OF THE DRAWINGS

FIG. 1 is a side view illustrating an overall configuration of a fishing spinning reel according to one embodiment of the present invention;
FIG. 2 is a perspective view in which the same one bail support member, a line roller, and a line slider are disassembled and arranged side by side;
FIG. 3 is an enlarged side view illustrating an inclination of an external inclined surface of the same one bail support member;
FIG. 4 is a front view of a rotor when viewed in a central axis direction of the same rotor;
FIGS. 5A and 5B are views illustrating an inclination of a side inclined surface of the same one bail support member, FIG. 5A is an enlarged explanatory view of a line slider side when viewed in a central axis direction of the line slider, and FIG. 5B is an enlarged explanatory view of the one bail support member when viewed from an outer surface side;
FIG. 6 is an enlarged explanatory view illustrating a curvature of an inner surface of a leg portion of the same one bail support member; and
FIGS. 7A and 7B are views illustrating a hood portion of the same one bail support member, FIG. 7A is an enlarged view when viewed from the front of the fishing spinning reel, and FIG. 7B is an enlarged cross-sectional view taken along line VI-VI in FIG. 7A.

### DETAILED DESCRIPTION

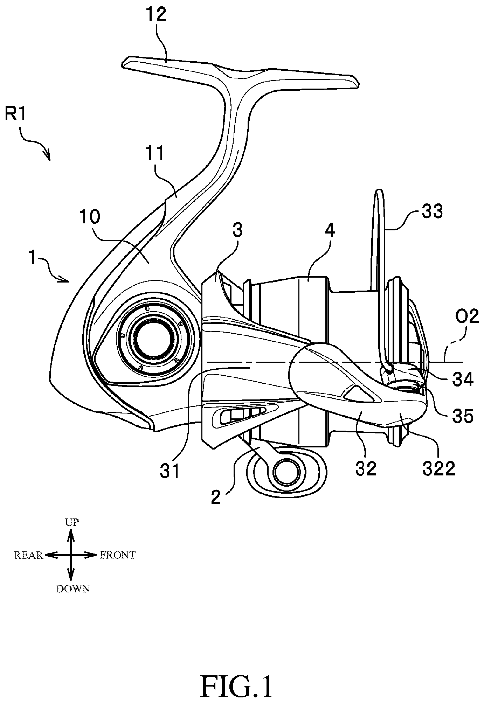

A fishing spinning reel according to an embodiment will be described with reference to the drawings. In the following description, "front and rear" and "up and down" referred to are defined based on directions illustrated in FIG. 1.

A fishing spinning reel R1 of the present embodiment comprises a reel body 1 to which a handle 2 is attached; a rotor 3 provided on the front side of the reel body 1 and rotated by a winding operation of the handle 2; and a spool 4 provided on the front side of the rotor 3 and reciprocated in a front-rear direction by a winding operation of the handle 2.

The reel body 1 comprises a body 10 and a leg portion 11 comprising a rod attachment portion 12, which extends upward from an upper portion of the body 10 to be mounted to a fishing rod, at a distal end. The body 10 comprises a body front portion having a tubular shape through which a drive shaft tube and a spool shaft (not illustrated) penetrate. The rotor 3 is attached to a front end of the drive shaft tube to cover the body front portion, and the spool 4 is attached to a front end of the spool shaft to cover a cylindrical portion (not illustrated) of the rotor 3.

A drive gear (not illustrated) that rotates around a handle shaft when the handle 2 is operated to rotate and a pinion gear (not illustrated) externally fitted to the drive shaft tube to mesh with the drive gear are provided inside the body 10. In addition, an oscillating mechanism driven by a drive gear attached to the handle shaft is connected to a rear portion of the spool shaft. Accordingly, when the drive gear is rotated by a rotational operation of the handle 2, the spool shaft and the spool 4 move forward and rearward, and a fishing line is wound around the spool 4 in a parallel and even manner.

The rotor 3 comprises a support arm 31 and a bail support member 32 rotatably attached to a front portion of the support arm 31. A pair of the support arms 31 and a pair of the bail support members 32 are each formed at an interval of substantially 180 degrees with respect to the cylindrical portion of the rotor 3, and are rotated around the spool 4 by the rotation of the rotor 3. In the fishing spinning reel R1 illustrated in FIG. 1, the support arm 31 and the bail support member 32 are located at the center in an up-down direction on one side that is one side of the reel body 1. In the pair of support arms 31 and the pair of bail support members 32, the support arm 31 and the bail support member 32 on the one side illustrated in FIG. 1 are referred to as one support arm 31 and one bail support member 32, and although not illustrated, the support arm 31 and the bail support member 32 on the other side opposite to the one side are referred to as the other support arm 31 and the other bail support member 32. In addition, when both support arms and both bail support members are referred to, the support arms and the bail support members are referred to as dual support arms 31 and 31 and dual bail support members 32 and 32.

The one support arm 31 extends forward from the cylindrical portion of the rotor 3, and supports the one bail support member 32. In addition, similarly, the other support arm 31 also extends forward from the cylindrical portion of the rotor 3, and supports the other bail support member 32. The dual bail support members 32 and 32 are supported to be rotatable between a fishing line winding position and a fishing line release position with respect to the dual support arms 31 and 31. FIG. 1 illustrates a state where the dual bail support members 32 and 32 are at the fishing line winding position.

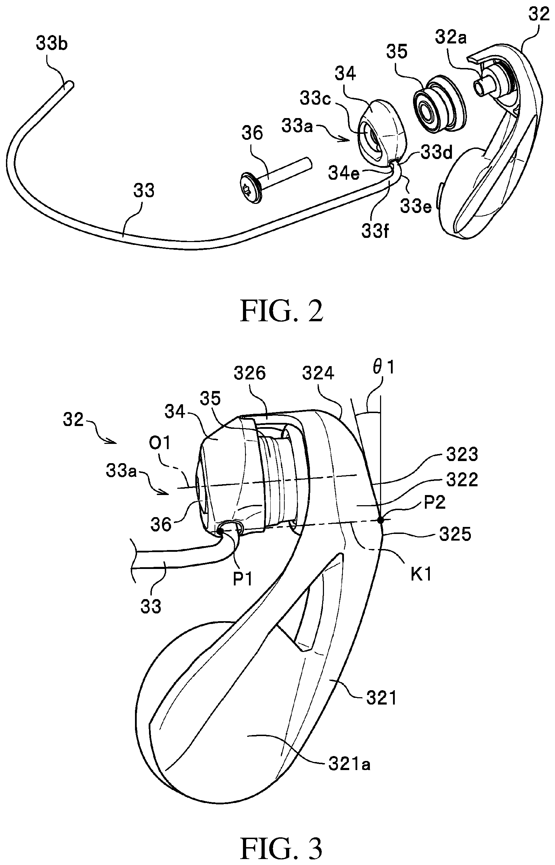

The dual bail support members 32 and 32 are members that support a bail 33 for picking up the fishing line. As illustrated in FIGS. 1 and 3, a line slider 34 that supports one end 33a of the bail 33 is attached to the one bail support member 32. In addition, a line roller 35 is rotatably supported between the one bail support member 32 and the line slider 34. The other bail support member 32 directly supports the other end 33b (refer to FIG. 2) of the bail 33.

As illustrated in FIG. 2, the bail 33 is a wire-shaped member that is curvedly formed in a substantially semi-circular shape. The one end 33a of the bail 33 has a shape that is bent at substantially 90 degrees (substantially right angle) toward the line slider 34, and comprises an attachment portion 33c, a straight portion 33d, a bent portion 33e, and an extending portion 33f.

The attachment portion 33c is a portion attached to the line slider 34, and has a loop shape. A fixing screw 36 is inserted into the inside of the attachment portion 33c. The fixing screw 36 is a fixing member for attaching the line slider 34 to the one bail support member 32. The fixing screw 36 is inserted from a line slider 34 side to which the one end 33a of the bail 33 is mounted, and is screwed to a cylindrical support shaft 32a of the one bail support member 32 in a state where the line roller 35 is disposed between the line slider 34 and the one bail support member 32. The line roller 35 is rotatably supported by the cylindrical support shaft 32a in a state where the fixing screw 36 is tightened. At least a part of the head of the fixing screw 36 is accommodated in the line slider 34. With such a configuration, the fishing line picked up by the bail 33 is guided to the line roller 35 via the line slider 34. The shape of the attachment portion 33c is not limited to having a loop shape, and may be any shape such as a C shape or a curved shape as long as the attachment portion 33c is fixed by the fixing screw 36.

The straight portion 33d of the bail 33 is a straight portion that is formed to be continuous with the attachment portion 33c, and is inserted into an insertion hole 34e of the line slider 34. The straight portion 33d extends at substantially 90 degrees (substantially right angle) with respect to an opening edge portion of the insertion hole 34e in a state where the attachment portion 33c is attached to the line slider 34.

The bent portion 33e is a portion that is bent in an arc shape and that is formed to be continuous with the straight portion 33d, and is bent in a direction toward the other end 33b of the bail 33 at a bending angle of substantially 90 degrees (substantially right angle) with respect to the straight portion 33d. The extending portion 33f is a substantially straight portion that is formed to be continuous with the bent portion 33e. The extending portion 33f is disposed in a substantially perpendicular positional relationship with the straight portion 33d.

As illustrated in FIG. 2, the line slider 34 supports the one end 33a of the bail 33, and supports an end of the line roller 35. The insertion hole 34e into which the one end 33a of the bail 33 is inserted is formed on an outer peripheral surface of the line slider 34.

When the one end 33a of the bail 33 is attached to the line slider 34, the other end 33b of the bail 33 is inserted into an accommodation portion of the line slider 34, and the other end 33b is inserted into the insertion hole 34e from an accommodation portion side. Then, the bail 33 is sequentially passed through the insertion hole 34e, and finally the one end 33a of the bail 33 is passed through the insertion hole 34e. When the attachment portion 33c of the bail 33 has a substantially C shape, a substantially curved shape, or the like, an end of the attachment portion 33c may be directly inserted and attached to the insertion hole 34e from the front side of the line slider 34.

Then, when the line slider 34 is attached to the one bail support member 32, as illustrated in FIG. 2, the line roller 35 is disposed between the line slider 34 and the one bail support member 32, and the fixing screw 36 is passed through the attachment portion 33c of the bail 33 and the line slider 34 from the line slider 34 side. Thereafter, the fixing screw 36 is screwed and tightened to the cylindrical support shaft 32a of the one bail support member 32 by which the line roller 35 is supported. Accordingly, the one end 33a of the bail 33, the line slider 34, and the line roller 35 can be collectively attached to the one bail support member 32.

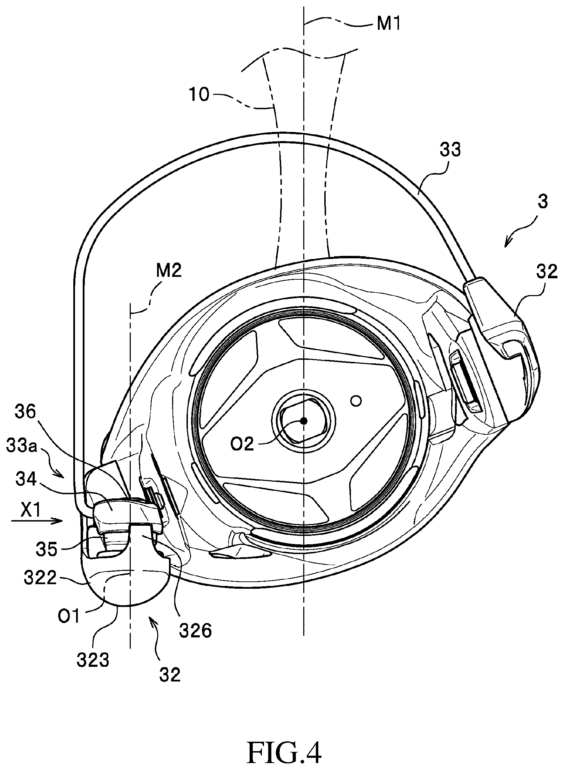

As illustrated in FIG. 3, the one bail support member 32 comprises a bail leg portion 321 and a support portion 322 provided to be continuous with the bail leg portion 321. The one bail support member 32 in FIG. 3 is illustrated as being viewed in a direction X1 to be described below based on the positional relationship of the line roller 35 in FIG. 4. FIG. 4 is a front view of the rotor 3 when viewed in the direction of a central axis O2 of the rotor 3. FIG. 4 illustrates a state where when a vertical plane including the central axis O2 of the rotor 3 (plane passing through the center of the body 10) is a first reference plane M1 and a plane including a central axis O1 of the line roller 35 is a second reference plane M2, the one bail support member 32 is disposed such that the second reference plane M2 is in a parallel positional relationship with the first reference plane M1. In the positional relationship illustrated in FIG. 4, the one bail support member 32 is viewed in the direction X1 that is a direction orthogonal to the second reference plane M2, and FIG. 4 is a side view of the one bail support member 32 illustrated in FIG. 3. Even when the one bail support member 32 illustrated in FIG. 3 is viewed in a direction orthogonal to the central axis O1 of the line roller 35 and orthogonal to the central axis O2 (refer to FIG. 1 and the same applies below) of the rotor 3 (refer to FIG. 1 and the same applies below), the one bail support member 32 is illustrated in the similar form.

As illustrated in FIG. 3, the bail leg portion 321 is a portion rotatably attached to the support arm 31 (refer to FIG. 1). The bail leg portion 321 is inclined to a side away from the spool 4 (right side on the drawing sheet of FIG. 3) from a base portion 321a attached to the support arm 31 toward the support portion 322.

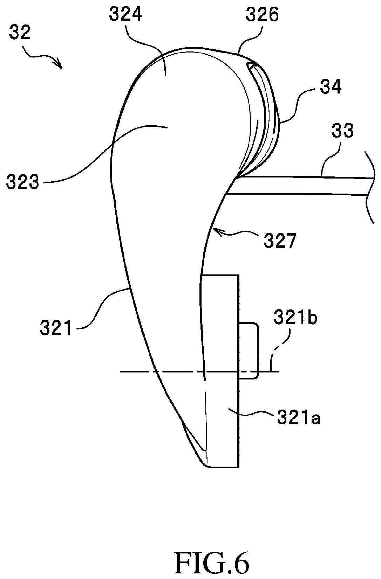

As illustrated in FIG. 6, the bail leg portion 321 comprises an inner portion 327 having a curved recess shape and facing the spool 4. FIG. 6 illustrates a bottom view of the one bail support member 32 when viewed from a lower surface side in a direction orthogonal to a rotation axis 321b of the support arm 31 (not illustrated) (in a bottom view). As illustrated in FIG. 6, the inner portion 327 depicts a gentle curve without constriction overall from a base portion 321a side toward the support portion 322. The radius of curvature of the inner portion 327 is set to 10 to 20 mm.

The support portion 322 is a portion that supports the line roller 35 and the line slider 34. The support portion 322 extends continuously from the bail leg portion 321 toward the front of the fishing spinning reel R1 (refer to FIG. 1). An external inclined surface 323 is formed on an outer surface (surface opposite to an inner surface side to which the line roller 35 is attached) of the support portion 322. The external inclined surface 323 is formed in a region where the cross-sectional shape of the line roller 35 in a radial direction is projected on the outer surface of the support portion 322. The external inclined surface 323 is inclined from a proximal end side of the support portion 322 (proximal end side of the one bail support member 32) toward a distal end side of the support portion 322 to approach the inner surface side of the one bail support member 32. Accordingly, the shape of an outer edge of the one bail support member 32 is a shape that is bent in a substantially dogleg shape at a boundary portion (top portion) 325 between the bail leg portion 321 and the support portion 322.

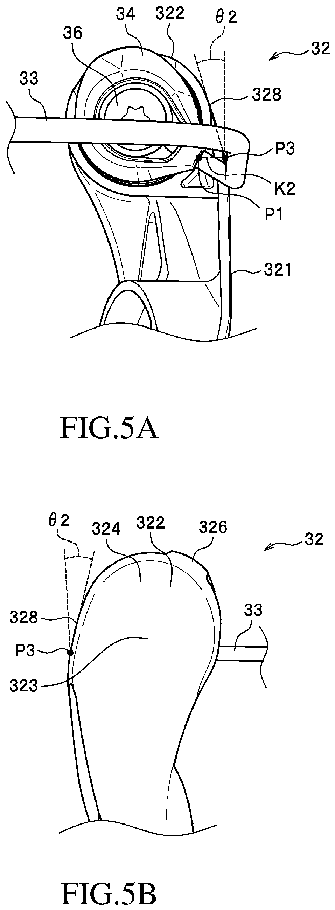

When a first reference line K1 passing through a joint point P1 between the line slider 34 and the bail 33 and parallel to the central axis O1 of the line slider 34 is drawn, the external inclined surface 323 of the present embodiment extends toward the distal end side of the one bail support member 32 with an intersection point P2 between the first reference line K1 and the outer surface of the one bail support member 32 as a starting point. Here, on the drawing sheet of FIG. 3, an inclination angle θ1 of the external inclined surface 323 with respect to a vertical direction can be set in a range of 10 to 20 degrees. By setting the inclination angle θ1 in this range, it is possible to suitably guide the fishing line from the proximal end side of the one bail support member 32 toward the distal end side and toward the inner surface side of the one bail support member 32 while reducing the weight of the distal end side of the one bail support member 32. As illustrated in FIG. 5B, an end of the fixing screw 36 (refer to FIG. 2) is not exposed on the outer surface of the one bail support member 32 comprising the external inclined surface 323, and the outer surface of the one bail support member 32 is a smooth surface.

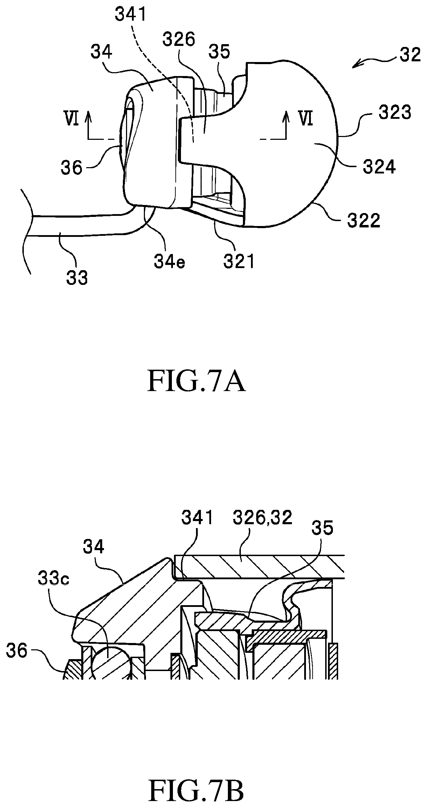

The support portion 322 comprises a curved surface 324 that is continuous with an extension end of the external inclined surface 323. The curved surface 324 is curved to approach the inner surface side of the one bail support member 32. A hood portion 326 is integrally formed at a distal end of the support portion 322 to be continuous with the curved surface 324. As illustrated in FIG. 7A, the hood portion 326 extends from the support portion 322 toward the line slider 34, and partially covers the line roller 35. As illustrated in FIG. 7B, an engagement portion 341 with which an extension end of the hood portion 326 engages is formed on the line slider 34. The extension end of the hood portion 326 protrudes somewhat outward from an outer peripheral surface of the line slider 34 in the radial direction in a state where the extension end is engaged with the engagement portion 341. A protrusion amount of the extension end of the hood portion 326 may be set such that the extension end of the hood portion 326 protrudes to the extent that the extension end has a slight step with respect to the outer peripheral surface of the line slider 34.

As illustrated in FIGS. 5A and 5B, a side inclined surface 328 is formed on a side surface (surface on the side away from the spool 4) of the support portion 322. The side inclined surface 328 is formed in a region where the cross-sectional shape of the line roller 35 in the radial direction is projected on the side surface of the support portion 322. The side inclined surface 328 is inclined from the proximal end side of the support portion 322 (proximal end side of the one bail support member 32) toward the distal end side of the support portion 322 to approach a spool 4 side.

As illustrated in FIG. 5A, when a second reference line K2 passing through the joint point P1 between the line slider 34 and the bail 33 and extending outward from the spool 4 in the radial direction is drawn, the side inclined surface 328 of the present embodiment extends toward the spool 4 side with an intersection point P3 between the second reference line K2 and the side surface of the one bail support member 32 as a starting point. Here, on the drawing sheets of FIGS. 5A and 5B, an inclination angle θ2 of the side inclined surface 328 with respect to the vertical direction can be set in a range of 10 to 20 degrees. By setting the inclination angle θ2 in this range, it is possible to suitably guide the fishing line from the proximal end side of the one bail support member 32 toward the distal end side and toward the inner surface side of the one bail support member 32 while reducing the weight of the distal end side of the one bail support member 32.

According to the fishing spinning reel R1 of the present embodiment described above, even when line entanglement such as the fishing line winding around the one bail support member 32 occurs, the fishing line can be guided from the proximal end side of the one bail support member 32 toward the distal end side and toward the inner surface side of the one bail support member 32 by the external inclined surface 323. Accordingly, the entangled fishing line is easily removed from the distal end side of the one bail support member 32, so that the line entanglement is suitably eliminated. Therefore, fishing operability is improved. In addition, for example, when the bail 33 is returned by a rotational operation of the handle 2, if the slackened fishing line becomes entangled with the one bail support member 32, by applying tension to the entangled fishing line through a rotational operation of the handle 2, the fishing line is moved on the external inclined surface 323 in a direction in which the fishing line is removed from the one bail support member 32, so that the line entanglement is suitably eliminated.

In addition, according to the fishing spinning reel R1 of the present embodiment, the fishing line is guided from the proximal end side of the one bail support member 32 toward the distal end side and toward the spool 4 side by the side inclined surface 328. Accordingly, the entangled fishing line is easily removed from the distal end side of the one bail support member 32, so that the line entanglement is suitably eliminated. Therefore, fishing operability is improved. In addition, by applying tension to the entangled fishing line through a rotational operation of the handle 2, the fishing line is moved on the side inclined surface 328 in the direction in which the fishing line is removed from the one bail support member 32, so that the line entanglement is suitably eliminated.

Further, according to the fishing spinning reel R1 of the present embodiment, due to a synergistic effect of the two external inclined surface 323 and side inclined surface 328, the fishing line is three-dimensionally guided from the proximal end side of the one bail support member 32 toward the distal end side and toward the inner surface side of the one bail support member 32 and the spool 4 side. Accordingly, the entangled fishing line is easily removed from the distal end side of the one bail support member 32, so that the line entanglement is suitably eliminated. Therefore, fishing operability is improved. In addition, by applying tension to the entangled fishing line through a rotational operation of the handle 2, the fishing line is moved on the external inclined surface 323 and the side inclined surface 328 in the direction in which the fishing line is removed from the one bail support member 32, so that the line entanglement is suitably eliminated.

In addition, since the external inclined surface 323 is formed in a region on the outer surface closer to the distal end side of the one bail support member 32 than the joint point P1 between the line slider 34 and the bail 33, the entangled fishing line can be effectively guided toward the distal end side of the one bail support member 32 and the inner surface side of the one bail support member 32. Accordingly, the line entanglement is suitably eliminated. In addition, since the weight of the distal end side of the one bail support member 32 can be reduced due to the external inclined surface 323, the inertial force of the rotor 3 can be reduced, and the light rotation performance of the rotor 3 can be realized. Accordingly, fishing operability is improved.

In addition, since the side inclined surface 328 is formed in a region on the side surface closer to the distal end side of the one bail support member 32 than the joint point P1 between the line slider 34 and the bail 33, the entangled fishing line can be effectively guided toward the distal end side of the one bail support member 32 and the spool 4 side. Accordingly, the line entanglement is suitably eliminated.

In addition, since the inner portion 327 of the bail leg portion 321 on the side facing the spool 4 has a gentle curved shape without constriction, the entangled fishing line is smoothly guided from the proximal end side of the one bail support member 32 toward the distal end side compared to a case where the inner portion has a large radius of curvature. Accordingly, line entanglement is suitably eliminated in conjunction with actions and effects by the external inclined surface 323 or the side inclined surface 328.

In addition, the fishing line removed from a distal end of the one bail support member 32 can be guided to the line slider 34 side through the hood portion 326. Accordingly, the fishing line removed from the distal end of the one bail support member 32 can be prevented from being caught on the line roller 35.

In addition, the fishing line guided to the line slider 34 side through the hood portion 326 moves to the outer peripheral surface of the line slider 34 located inside the extension end of the hood portion 326 in the radial direction via the extension end protruding somewhat outward in the radial direction. Accordingly, the fishing line removed from the distal end of the one bail support member 32 can be prevented from being caught on the engagement portion 341 in the process of moving to the line slider 34 side.

In addition, since the fixing screw 36 can be screwed from the line slider 34 side, it is not necessary to provide a screw hole on an outer surface side of the one bail support member 32, and the fixing screw 36 is not exposed on the outer surface side of the one bail support member 32. Accordingly, in the event of line entanglement of the fishing line, even when the fishing line moves on the outer surface side of the one bail support member 32, damage to the fishing line due to contact with the screw hole does not occur. In addition, since at least a part of the head of the fixing screw 36 is accommodated in the line slider 34, the fishing line is also less likely to become entangled with the head of the fixing screw 36 on the line slider 34 side.

The embodiment of the present invention has been described above; however, the present invention is not limited to the example described in the embodiment. For example, in the embodiment, the configuration in which the external inclined surface 323 is formed in the region where the cross-sectional shape of the line roller 35 in the radial direction is projected on the outer surface of the support portion 322 has been described; however, the present invention is not limited thereto, and the external inclined surface 323 may be formed to protrude to a portion outside the region where the cross-sectional shape is projected. In addition, the configuration in which the side inclined surface 328 is formed in the region where the cross-sectional shape of the line roller 35 in the radial direction is projected on the side surface of the support portion 322 has been described; however, the present invention is not limited thereto, and the side inclined surface 328 may be formed to protrude to a portion outside the region where the cross-sectional shape is projected.

**In** addition, a configuration in which the shape of the outer edge of the one bail support member 32 is a shape that is bent in a substantially dogleg shape at the boundary portion (top portion) 325 between the bail leg portion 321 and the support portion 322 has been described; however, the present invention is not limited thereto, and various shapes can be adopted for the external inclined surface 323 or the side inclined surface 328 as long as the external inclined surface 323 or the side inclined surface 328 is formed.

**In** addition, the fixing screw 36 is used as a member that fixes the line slider 34 to the bail support member 32, but is not limited thereto, and a configuration in which fixing is performed by a pin member fixed by press-fitting, bonding, or the like may be adopted.

### Reference Signs List

- 2: Handle
- 3: Rotor
- 4: Spool
- 31: Support arm
- 32: Bail support member
- 33: Bail
- 33a: One end
- 34: Line slider
- 34e: Insertion hole
- 36: Fixing screw
- 35: Line roller
- 321: Bail leg portion
- 321b: Rotation axis
- 322: Support portion
- 323: External inclined surface
- 326: Hood portion
- 327: Inner portion
- 328: Side inclined surface
- 341: Engagement portion
- K1: First reference line
- K2: Second reference line
- M1: First reference plane
- M2: Second reference plane
- O1: Central axis of line roller
- O2: Central axis of spool
- P1: Joint point between line slider and bail
- P2: Intersection point between first reference line and outer surface of the bail support member
- P3: Intersection point between second reference line and side surface of bail support member
- R1: Fishing spinning reel
- X1: Direction orthogonal to second reference plane

## Claims

1. A fishing spinning reel (R1) comprising: a rotor (3) rotated by a winding operation of a handle (2); a bail support member (32) attached to a support arm (31) of the rotor (3), and supporting a bail (33); a line roller (35) supported by the bail support member (32), and guiding a fishing line to a spool (4) around which the fishing line is wound and held; and a line slider (34) supporting one end (33a) of the bail (33), and guiding the fishing line picked up by the bail (33) to the line roller (35),
wherein:
an external inclined surface (323) is formed in a region where the line roller (35) is projected on an outer surface of the bail support member (32) opposite to a side to which the line roller (35) is attached, and
when a vertical plane including a central axis of the rotor (3) is a first reference plane (M1) and a plane including a central axis (O1) of the line roller (35) is a second reference plane (M2), the external inclined surface (323) is inclined from a proximal end side of the bail support member (32) toward a distal end side of the bail support member (32) to approach an inner surface side of the bail support member (32) when viewed in a direction orthogonal (X1) to the second reference plane (M2) in a state where the bail support member (32) is disposed such that the first reference plane (M1) and the second reference plane (M2) are in a parallel positional relationship,
said fishing spinning reel being **characterized in that**, when a first reference line (K1) parallel to a central axis (O1) of the line slider (34) and passing through a joint point (P1) between the line slider (34) and the bail (33) when viewed in the direction (X1) orthogonal to the second reference plane (M2) is drawn, the external inclined surface (323) extends toward the distal end side of the bail support member (32) with an intersection point (P2) between the first reference line (K1) and the outer surface of the bail support member (32) as a starting point.

2. The fishing spinning reel (R1) according to claim 1, wherein:
a side inclined surface (328) is formed in a region where the line roller (35) is projected on a side surface of the bail support member (32) on a side away from the spool (4) when the bail support member (32) is viewed in a central axis direction of the line slider (34), and
the side inclined surface (328) is inclined to approach a spool (4) side as the side inclined surface (328) extends from the proximal end side of the bail support member (32) toward the distal end side of the bail support member (32).

3. The fishing spinning reel (R1) according to claim 2, wherein when a second reference line (K2) passing through a joint point (P1) between the line slider (34) and the bail (33) and extending outward from the spool (4) in a radial direction when viewed in the central axis (O1) direction of the line slider (34) is drawn, the side inclined surface (328) extends toward the distal end side of the bail support member (32) with an intersection point (P3) between the second reference line (K2) and the side surface of the bail support member (32) as a starting point.

4. The fishing spinning reel (R1) according to claim 1 or claim 2, wherein the bail support member (32) comprises a bail leg portion (321) rotatably attached to the support arm (31), and a support portion (322) provided to be continuous with the bail leg portion (321) and supporting the line roller (35),
an inner portion (327) having a curved recess shape is formed in the bail leg portion (321) on a side facing the spool (4) in a bottom view in a direction orthogonal to a rotation axis (321b) of the bail support member (32) and the support arm (31), and
a radius of curvature of the inner portion (327) is 10 to 20 mm.

5. The fishing spinning reel according to claim 1 or claim 2, wherein a hood portion (326) partially covering the line roller (35) is integrally formed on the bail support member (32), and
the hood portion (326) extends from a bail support member (32) side toward the line slider (34).

6. The fishing spinning reel (R1) according to claim 5, wherein an engagement portion (341) with which an extension end of the hood portion (326) engages is formed on the line slider (34), and
the extension end of the hood portion (326) protrudes outward from an outer peripheral surface of the line slider (34) in a radial direction in a state where the extension end is engaged with the engagement portion (341).

## Patentansprüche

1. Angelwinde (R1), umfassend: einen Rotor (3), der durch einen Wickelvorgang einer Kurbel (2) gedreht wird; ein Bügelstützelement (32), das an einem Stützarm (31) des Rotors (3) befestigt ist und einen Bügel (33) trägt; eine Schnurrolle (35), die von dem Bügelstützelement (32) getragen wird und eine Angelschnur zu einer Spule (4) führt, um die die Angelschnur gewickelt und gehalten wird; und einen Schnurschieber (34), der ein Ende (33a) des Bügels (33) trägt und die vom Bügel (33) aufgenommene Angelschnur zur Schnurrolle (35) führt,
wobei:
eine äußere geneigte Fläche (323) in einem Bereich ausgebildet ist, in dem die Schnurrolle (35) auf eine Außenfläche des Bügelstützelements (32) gegenüber der Seite projiziert wird, an der die Schnurrolle (35) befestigt ist, und
wenn eine vertikale Ebene, die die Mittelachse des Rotors (3) enthält, eine erste Bezugsebene (M1) ist, und eine Ebene, die die Mittelachse (O1) der Schnurrolle (35) enthält, eine zweite Bezugsebene (M2) ist, so ist die äußere geneigte Fläche (323) von einer proximalen Endseite des Bügelstützelements (32) zu einer distalen Endseite des Bügelstützelements (32) geneigt, um sich einer Innenfläche des Bügelstützelements (32) anzunähern, wenn in einer Richtung orthogonal (X1) zur zweiten Bezugsebene (M2) betrachtet, in einem Zustand, bei dem das Bügelstützelement (32) so angeordnet ist, dass die erste Bezugsebene (M1) und die zweite Bezugsebene (M2) parallel zueinander sind, wobei die Angelwinde **dadurch gekennzeichnet ist, dass**, wenn
eine erste Bezugslinie (K1) gezeichnet wird, die parallel zur Mittelachse (O1) des Schnurschiebers (34) und durch einen Verbindungspunkt (P1) zwischen dem Schnurschieber (34) und dem Bügel (33) verläuft, wenn in der Richtung (X1) orthogonal zur zweiten Bezugsebene (M2) betrachtet, die äußere geneigte Fläche (323) sich in Richtung der distalen Endseite des Bügelstützelements (32) erstreckt, wobei ein Schnittpunkt (P2) zwischen der ersten Bezugslinie (K1) und der Außenfläche des Bügelstützelements (32) als Ausgangspunkt dient.

2. Angelwinde (R1) nach Anspruch 1, wobei:
eine seitlich geneigte Fläche (328) in einem Bereich bildet ist, in dem die Schnurrolle (35) auf eine Seitenfläche des Bügelstützelements (32) auf der vor Spule (4) abgewandten Seite projiziert wird, wenn das Bügelstützelement (32) in Richtung der Mittelachse des Schnurschiebers (34) betrachtet wird, und
die seitlich geneigte Fläche (328) so geneigt ist, dass sie sich der Spulenseite (4) annähert, wenn sich die seitlich geneigte Fläche (328) von der proximalen Endseite des Bügelstützelements (32) in Richtung der distalen Endseite des Bügelstützelements (32) erstreckt.

3. Angelwinde (R1) nach Anspruch 2, wobei, wenn eine zweite Bezugslinie (K2) gezeichnet wird, die durch einen Verbindungspunkt (P1) zwischen dem Schnurschieber (34) und dem Bügel (33) verläuft und sich, in einer Richtung der Mittelachse (O1) des Schnurschiebers (34) betrachtet, in einer radialen Richtung von der Spule (4) nach außen erstreckt, die seitliche geneigte Fläche (328) sich in Richtung der distalen Endseite des Bügelstützelements (32) erstreckt, wobei der Schnittpunkt (P3) zwischen der zweiten Bezugslinie (K2) und der Seitenfläche des Bügelstützelements (32) als Ausgangspunkt dient.

4. Angelwinde (R1) nach Anspruch 1 oder Anspruch 2, wobei das Bügelstützelement (32) einen Bügelschenkelabschnitt (321) umfasst, der drehbar am Stützarm (31) befestigt ist, und einen Stützabschnitt (322), der mit dem Bügelschenkelabschnitt (321) durchgehend bereitgestellt ist und die Schnurrolle (35) trägt,
im Bügelschenkelabschnitt (321) auf einer der Spule (4) zugewandten Seite von unten gesehen in einer Richtung orthogonal zu einer Drehachse (321b) des Bügelstützelements (32) und des Stützarms (31) ein innerer Abschnitt (327) mit einer gebogenen Aussparungsform ausgebildet ist,
der Krümmungsradius des inneren Abschnitts (327) 10 bis 20 mm beträgt.

5. Angelwinde nach Anspruch 1 oder Anspruch 2, wobei ein die Schnurrolle (35) teilweise bedeckender Haubenabschnitt (326) einstückig am Bügelstützelement (32) ausgebildet ist, und
der Haubenabschnitt (326) sich von einem Bügelstützelement (32) zum Schnurschieber (34) erstreckt.

6. Angelwinde (R1) nach Anspruch 5, wobei am Schnurschieber (34) ein Eingriffsabschnitt (341) ausgebildet ist, mit dem ein Verlängerungsende des Haubenabschnitts (326) in Eingriff steht, und
das Verlängerungsende des Haubenabschnitts (326) in einem Zustand, in dem das Verlängerungsende mit dem Eingriffsabschnitt (341) in Eingriff steht, in einer radialen Richtung von einer äußeren Umfangsfläche des Schnurschiebers (34) nach außen ragt.

## Revendications

1. Moulinet de pêche (R1) comprenant : un rotor (3) mis en rotation par une opération d'enroulement à l'aide d'une manivelle (2) ; un support d'anse (32) fixé à un bras de support (31) du rotor (3) et supportant une anse (33) ; un galet de ligne (35) supporté par le support d'anse (32) et guidant une ligne de pêche vers une bobine (4) autour de laquelle le fil de pêche est enroulé et maintenu ; et un coulisseau de ligne (34) supportant une certaine extrémité (33a) de l'anse (33) et guidant le fil de pêche récupéré par l'anse (33) vers le galet de fil (35).
dans lequel :
une surface inclinée externe (323) est formée dans une région où le galet de fil (35) est projeté sur une surface extérieure du support d'anse (32) opposée à un côté auquel le galet de fil (35) est fixé, et
lorsqu'un plan vertical incluant un axe central du rotor (3) est un premier plan de référence (M1) et un plan incluant un axe central (O1) du galet de fil (35) est un second plan de référence (M2), la surface inclinée externe (323) est inclinée depuis une extrémité proximale du support d'anse (32) vers une extrémité distale du support d'anse (32), de manière à se rapprocher d'une surface interne du support d'anse (32), lorsqu'il est vu dans une direction orthogonale (X1) orthogonale au second plan de référence (M2), dans un état où le support d'anse (32) est disposé de telle sorte que le premier plan de référence (M1) et le second plan de référence (M2) sont dans une relation de position parallèle, ledit moulinet de pêche est **caractérisé en ce que**, lorsqu'
une première ligne de référence (K1) parallèle à un axe central (O1) du coulisseau de ligne (34) et passant par un point de joint (P1) entre le coulisseau de ligne (34) et l'anse (33) lorsqu'elle est vue dans la direction (X1) orthogonale au second plan de référence (M2) est tracée, la surface inclinée externe (323) s'étend vers l'extrémité distale du support d'anse (32) avec un point d'intersection (P2) entre la première ligne de référence (K1) et la surface extérieure du support d'anse (32) comme point de départ.

2. Moulinet de pêche (R1) selon la revendication 1, dans lequel :
une surface inclinée latérale (328) est formée dans une région où le galet de fil (35) est projeté sur une surface latérale du support d'anse (32) du côté opposé à la bobine (4) lorsque le support d'anse (32) est vu dans une direction d'axe central du coulisseau de ligne (34), et
la surface inclinée latérale (328) est inclinée pour s'approcher d'un côté de la bobine (4) à mesure que la surface inclinée latérale (328) s'étend de l'extrémité proximale du support d'anse (32) vers l'extrémité distale du support d'anse (32).

3. Moulinet de pêche (R1) selon la revendication 2, dans lequel lorsqu'une seconde ligne de référence (K2) passant par un point de joint (P1) entre le coulisseau de ligne (34) et l'anse (33) et s'étendant vers l'extérieur de la bobine (4) dans une direction radiale lorsqu'elle est vue dans la direction d'axe central (O1) du coulisseau de ligne (34) est tracée, la surface inclinée latérale (328) s'étend vers l'extrémité distale du support d'anse (32) avec un point d'intersection (P3) entre la seconde ligne de référence (K2) et la surface latérale du support d'anse (32) comme point de départ.

4. Moulinet de pêche (R1) selon la revendication 1 ou la revendication 2, dans lequel le support d'anse (32) comprend une partie de jambe d'anse (321) fixée de manière rotative au bras de support (31), et une partie de support (322) conçue pour être continue avec la partie de jambe d'anse (321) et supportant le galet de fil (35),
une partie intérieure (327) présentant une forme en retrait incurvée est formée dans la partie de jambe d'anse (321) sur un côté faisant face à la bobine (4) dans une vue de dessous dans une direction orthogonale à un axe de rotation (321b) du support d'anse (32) et du bras de support (31), et
un rayon de courbure de la partie intérieure (327) est de 10 à 20 mm.

5. Moulinet de pêche selon la revendication 1 ou la revendication 2, dans lequel une partie de capot (326) recouvrant partiellement le galet de fil (35) est formée d'un seul tenant sur le support d'anse (32), et
la partie de capot (326) s'étend d'un côté du support d'anse (32) vers le coulisseau de ligne (34).

6. Moulinet de pêche (R1) selon la revendication 5, dans lequel une partie de mise en prise (341) avec laquelle une extrémité d'extension de la partie de capot (326) vient en prise est formée sur le coulisseau de ligne (34), et
l'extrémité d'extension de la partie de capot (326) fait saillie vers l'extérieur à partir d'une surface périphérique extérieure du coulisseau de ligne (34) dans une direction radiale dans un état où l'extrémité d'extension vient en prise avec la partie de mise en prise (341).
